# EUROPÄISCHE PATENTSCHRIFT

(11) **EP 0 468 915 B1**
(45) Veröffentlichungstag und Bekanntmachung des Hinweises auf die Patenterteilung: **14.12.1994**
(21) Anmeldenummer: 91810497.7
(22) Anmeldetag: 25.06.1991
(51) Int. Cl.: A47J 31/40

(54) **Vorrichtung zur Zubereitung von heissen Getränken durch Extraktion**
Device for preparing hot drinks by extraction
Appareil pour préparer des boissons chaudes par extraction

(30) Priorität: 23.07.1990 CH 432/90
(43) Veröffentlichungstag der Anmeldung: 29.01.1992
(73) Patentinhaber: PRODIANA AG, 8854 Siebnen (CH)
(72) Erfinder: Schneeberger, Gerhard, CH-8180 Bülach (CH)
(74) Vertreter: Feldmann, Clarence Paul

(56) Entgegenhaltungen:
- EP-A- 0 154 206
- EP-A- 0 184 561
- DE-A- 2 912 841
- DE-A- 3 105 124
- FR-A- 2 447 702
- US-A- 3 824 913
- US-A- 4 709 625

## Beschreibung

Die vorliegende Erfindung betrifft eine Vorrichtung zur Zubereitung von heissen Getränken durch Extraktion, insbesondere zur Zubereitung von Kaffee, mit einer Getränkepulveraufbereitungs- und Dosiereinheit, einer Heisswasseraufbereitung mit einer Dosierpumpe und Ausstossmittel zur Entfernung des aufgebrauchten Getränkepulvers aus einem Extraktionsbecher. Vorrichtungen dieser Art sind, insbesondere für den gewerblichen Gebrauch, in vielen Ausführungsformen bekannt und haben sich bestens bewährt. Gleichartige Vorrichtungen für den Haushalt hingegen, sind erst seit wenigen Jahren mit gleichartigen Bedienungskomfort auf dem Markt erhältlich. Die bisher bekannten, sogenannten Espressomaschinen waren ausserordentlich wartungsintensiv, was inbesondere für ein Konsumentengerät äusserst nachteilig ist. Um einen einwandfreien Betrieb zu garantieren, sind insbesondere zwei Bedingungen unabdingbar, nämlich möglichst wenig bewegliche Teile und zum Zweiten eine einfache Reinigung jener Teile, die einer Verschmutzung ausgesetzt sind.

Diese Ueberlegungen wurden bereits angestellt, bei einer Vorrichtung zum Herstellen von Espressokaffee gemäss der DE-A-2912841. Gemäss dieser Vorrichtung wird mit einem Extraktionsbecher gearbeitet, der ortsfest in der Maschine montiert ist, während die Getränkepulveraufbereitungs- und Dosiereinheit, sowie die Wasseraufbereitung über den fest montierten Extraktionsbecher geschwenkt werden. Der Ausstoss des Filterkuchens erfolgt über den im Extraktionsbecher geführten und mittels einem Stössel beweglichen unteren Filter. Der Abwurf des Filterkuchens vom unteren Filter erfolgt passiv mittels einem Abstreifer an der schwenkbaren Brühkammer. Neben der grossen Masse, die hier bewegt werden muss, sind auch noch die beiden zu bewegenden Komponenten, aktive Komponenten, deren Steuerung und Betätigung somit auch noch an verschiedenen Stellen erfolgen muss.

Sowohl aus der US-A-4'709'625 als auch aus der DE-A-3 105 124 ist jeweils eine Vorrichtung zur Zubereitung von heissen Getränken bekannt, bei der ein Extraktionsbecher auf einem Schlitten horizontal bewegt wird, während der Extraktionskolben eine vertikale Bewegung aus führt.

Demgegenüber ist die gattungsbildende Vorrichtung gemäss der EP-A0′184′561 erheblich einfacher im Aufbau und folglich auch weniger störungsanfällig. Bei dieser Vorrichtung ist die Getränkepulveraufbereitungs- und Dosiereinheit fest in einem Gehäuse angeordnet, genauso wie die Heisswasseraufbereitung mit einer Dosierpumpe an einer anderen Stelle im Gehäuse fest montiert ist. Der Extraktionsbecher wandert lediglich in einer horizontalen Ebene zwischen den beiden Einheiten hin und her und wird zusätzlich noch in einer dritten Position bewegt, wo Ausstossmittel zur Entfernung des gebrauchten Getränkepulvers aus dem Extraktionsbecher vorhanden sind. Obwohl diese Vorrichtung gegenüber der vorgenannten bereits erheblich vereinfacht ist, sind trotzdem noch eine grosse Anzahl von beweglichen Elementen erforderlich. Der Extraktionsbecher muss in einem ersten Schritt von der Getränkepulveraufbereitungs- und Dosiereinheit zur Brühstation verschoben werden, von dort weiter translatorisch zu der Station bewegt werden, in der mittels Ausstossmittel der Filterkuchen ausgestossen werden kann, wobei hier zusätzlich noch der Extraktionsbecher umgedreht werden muss, danach muss er wieder zurückgedreht werden und von der Ausstossstation zurück zur Dosiereinheit gefahren werden. Weitere bewegliche Organe werden für die Auf- und Abbewegung des oberen Filters, der in den Extraktionsbecher hineingedrückt wird, benötigt und ferner ist ein wiederum beweglicher Filterkuchenausstösser erforderlich. Letzterer kann allerdings mittels einem einfachen, passiv tätigen Hebel erfolgen. Das Entfernen des Extraktionsbechers aus der Vorrichtung um ihn reinigen zu können, ist nicht möglich. Die komplexe Führung des Extraktionsbechers erlaubt dessen einfache Entfernung nicht.

Die Vorrichtung gemäss der EP-A-0′154′206 akzeptiert bereits als Faktum, das solche Vorrichtungen unterhaltsintensiv sind. Entsprechend wird hier vorgeschlagen, dass mindestens annähernd sämtliche einer Beaufschlagung durch Getränkepulver unterworfenen Teile der Vorrichtung zu einer Baugruppe zusammengefasst sind, die lösbar im Gehäuse der Vorrichtung eingesetzt ist. Diese herausnehmbare Baugruppe erleichtert den Service, ist jedoch nicht geeignet für die Hausfrau, um die von Zeit zu Zeit erforderliche Reinigung der vorhandenen Filter vorzunehmen. Die zu einer Baugruppe zusammengefassten Teile lassen sich somit en bloc auswechseln und in die Werkstatt nehmen, zur Revision und Reinigung. Der Extraktionsbecher ist in der letztgenannten Ausführung aus einer Kolbenzylindereinheit gebildet, die insgesamt auf und nieder bewegbar, sowie schwenkbar ist

Es ist folglich die Aufgabe der vorliegenden Erfindung, eine Vorrichtung der eingangs genannten Art derart zu verbessern, dass möglichst wenig Teile aktiv bewegt werden müssen, und wobei sowohl der Extraktionsbecher, wie auch die vorhandenen Filter für die Reinigung ohne spezielle Montage beziehungsweise Demontage entnommen werden können.

Diese Aufgabe löst eine Vorrichtung der eingangs genannten Art, mit den Merkmalen des Patentanspruches 1.

Weitere Merkmale der Erfindung sind in den Unteransprüchen angegeben und werden anhand der Zeichnung näher erläutert.

In der beiliegenden Zeichnung ist der erfindungswesentliche Teil einer Vorrichtung zur Zubereitung von heissen Getränken durch Extraktion schematisch dargestellt unter Weglassung aller bekannten, für die Erfindung unwesentlichen Teile. Die Zeichnung zeigt den hier besonders interessierenden Extraktionsbecher in vier verschiedenen Positionen und zwar:
Figur 1 in der Ausgangsposition;
Figur 2 in der Extraktionsposition;
Figur 3 in der Filterkuchenausstosslage und
Figur 4 beim Rücklauf in die Ausgangsposition nach Figur 1, während des Abstreifens des Filterkuchens.

Selbstverständlich ist die erfindungsgemässe Vorrichtung geeignet für die Zubereitung von heissen Getränken jeglicher Art, die sich aus einem Pulver oder Granulat mittels heissem Wasser durch Extraktion herstellen lassen. In der bevorzugten Anwendung wird die Vorrichtung zur Zubereitung von Kaffee verwendet. In der nachfolgenden Beschreibung wird folglich nicht mehr in der verallgemeinenden Form von Getränkepulver, sonderen nur noch von Kaffeepulver und nicht mehr allgemein von heissen Getränken, sondern nur noch von Kaffee gesprochen.

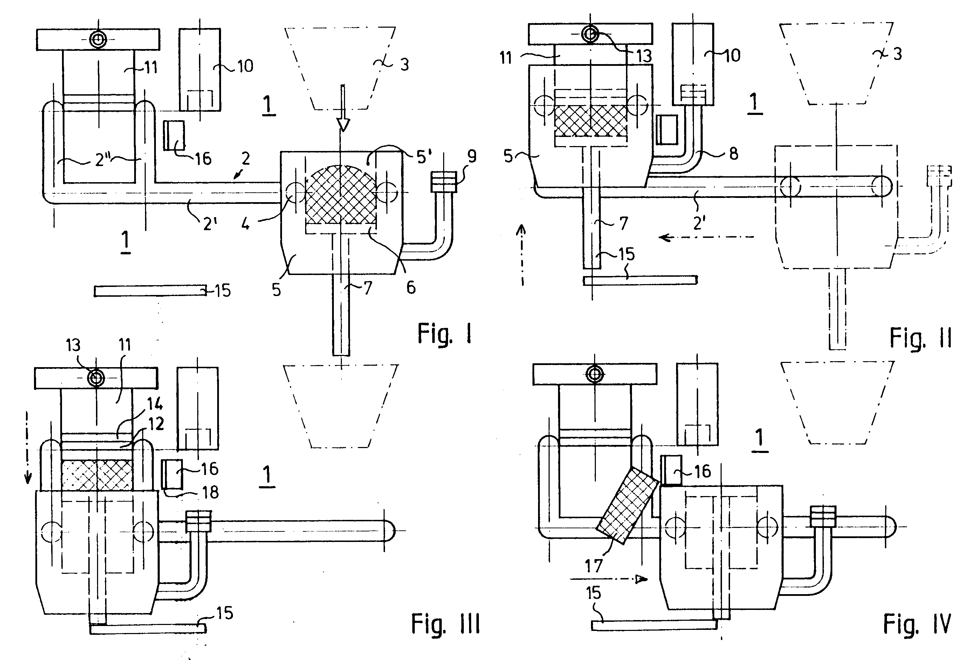

Die vereinfachte Darstellung zeigt eine Aufsicht auf einer Montageplatte 1, in der eine Steuerbahn eingelassen ist. Die Steuerbahn 2 hat die Form eines L oder F. Ob L oder F ist lediglich abhängig von der Gestalt des beweglichen Halters 4, besteht dieser nur aus einem Element, so hat die Steuerbahn die Form eines L, hat jedoch der bewegliche Halter 4 zwei, bezüglich der horizontalen Bewegung fluchtend hintereinanderliegende Elemente, so ist der vertikale Bahnanteil 2˝ doppelt geführt und die gesamte Steuerbahn hat die Form eines F, aber auch in dieser Gestalt bewegt sich der Halter 4 lediglich auf einer L-förmigen Bahn. Insbesondere, wenn der Halter 4 aus einem einzigen Element besteht, so kann die Steuerbahn 2 auch eine andere Form als die Beschriebene aufweisen. Wesentlich ist jedoch, dass der Halter eine horizontale und eine vertikale Bewegung durchführt, diese Bewegungen können jedoch gleichzeitig und überlagert stattfinden, so dass die Steuerbahn die Form eines Bogens hat. Im dargestellen Beispiel ist der Halter 4 aus zwei parallel verlaufenden Steckbolzen gebildet. Auf diesen lässt sich ein Extraktionsbecher 5 einfach aufstecken. Diese lösbare Verbindung garantiert eine einfache Entnahme des Extraktionsbechers 5, falls dies für die Reinigung erwünscht wird. In der Figur 1 ist der Extraktionsbecher 5 in der sogenannten Ausgangslage dargestellt, wobei der Halter 4 in der zu äusserst rechten Position in der Steuerbahn 2 ist. In dieser Lage befindet sich der Extraktionsbecher genau unterhalb einem Einfülltrichter, der zur Pulveraufbereitungseinheit 3 gehört. Die Pulveraufbereitungseinheit kann ein Vorratsbehältnis für Kaffeebohnen, ein Mahlwerk und eine Dosiervorrichtung enthalten. Derartige Pulveraufbereitungseinheiten sind aus der Patentliteratur in vielen Varianten bekannt. Während sich der Extraktionsbecher 5 in der Ausgangslage befindet, gelangt eine vorgegebene Menge gemahlenes Kaffeepulver in den Hohlraum 5' des Extraktionsbecher 5. Es gelangt dabei auf einem beweglichen Filter 6, der im Hohlraum 5' des Extraktionsbechers 5 auf und nieder bewegt werden kann. Hierzu ist ein Stössel 7 vorgesehen, der den Extraktionsbecherboden durchsetzt und auf den beweglichen Filter 6 wirkt. Selbstverständlich ist der Stössel 7 im Extraktionsbecher 5 dichtend gelagert. Die Dichtung kann mittels einem O-Ring erfolgen, der jedoch in der Zeichnung nicht dargestellt ist.

Ist der Extraktionsbecher 5 mit der vorgegebenen Menge Kaffepulver gefüllt, so wird der Halter 4 in der Steuerbahn 2 in die sogenannte Extraktionsposition verschoben. Hierbei gleitet der Halter 4 zuerst um den horizontalen Anteil 2' der Steuerbahn 2 nach links bis sich der Extraktionsbecher 5 exakt senkrecht unter einem Extraktionskolben 11 befindet. Der Querschnittt des Extraktionskolbens 11 entspricht genau dem Innenmass des Hohlraumes 5' des Extraktionsbechers 5. Zuunterst am Extraktionskolben 11 ist ein lösbarer Filter 12 angeordnet und gleich darüber eine Dichtung 14. Wenn der bewegliche Halter 4 von der Ausgangslage gemäss der Figur 1 in die Extraktionslage gemäss der Figur 2 sich bewegt, gleitet der Halter 4 somit entsprechend dem vertikalen Anteil 2'' der Steuerbahn nach oben, gleichzeitig mehrere Funktionen. Zum einen wird das Kaffeepulver zwischen den beiden Filtern 6 und 12 zu einem Kuchen komprimiert, zum anderen stösst ein fest am Extraktionsbecher 5 angeordneter, mit einer Dichtung 9 versehener Heisswassereinlaufstutzen 8 in einer entsprechenden Kupplung der Heisswasseraufbereitung 10. Nun kann der eigentliche Extraktionsvorgang stattfinden. Hierzu fliesst aus der Heisswasseraufbereitung 10 durch den Heisswassereinlaufstutzen 8 ein abgemessenes Quantum aufgeheiztes Wasser, durch nicht dargestellte im Boden des Extraktionsbechers 5 angeordnete Bohrungen, in den Bereich unterhalb dem beweglichen Filter 6. Das erhitzte Wasser durchströmt den beweglichen Filter 6, das komprimierte Kaffeepulver und den darüber befindlichen obere Filter 12 des Extraktionskolbens 11 und steigt wiederum durch nicht dargestellte Bohrungen im Extraktionskolben 11, zu dessen Auslauf 13 auf. Von hier gelangt der so aufbereitete Kaffee in bereitgestellte Tassen. Das verbleibende, nun extrahierte Kaffeepulver bildet nun einen sogenannten Filterkuchen 17. Bevor nun der Extraktionsbecher 5 wiederum in seine Ausgangslage gemäss der Figur 1 zurück bewegt wird, wird ein in der Montageplatte 1 angeordneter ausfahrbarer Anschlag 15 in den Weg des Stössels 7 geschoben. Dies braucht keineswegs einen gesonderten Antrieb, sondern kann rein mechanisch durch die Bewegung des Halters 4 ausgelöst werden. Ist der Anschlag 15, wie in den nachfolgenden Figuren dargestellt, ausgefahren, so bleibt der Stössel 7 bei der Abwärtsbewegung des Extraktionsbechers 5 oben gehalten, wenn der bewegliche Halter 4 sich im vertikalen Anteil 2˝ der Steuerbahn 2 abwärts bewegt. Hierbei verschiebt sich der Extraktionsbecher 5 relativ zum beweglichen Filter 6 um die Tiefe seines Hohlraumes 5′ nach unten, so dass nunmehr der Filterkuchen 17 bündig mit der Oberkante des Extraktionsbechers 5 oben auf denselben aufliegt. Diese Situation ist in der Figur 3 dargestellt. Bei dieser Vertikalbewegung des Extraktionsbechers wurde natürlich auch der Heisswassereinlaufstutzen 8 aus der Kupplungsdose der Heisswasseraufbereitung 10 gezogen. Zur Vereinfachung der Steuerung kann der Einlaufstutzen 8 beim Einfahren in die Kupplungsdose der Heisswasseraufbereitung 10 auch ein Einlassventil betätigen. Auf diese Art entfällt ein gesonderter Steuermechanismus für das Wassereinlassventil. Ist diese Ventil als Rückschlagventil konzipiert, so schliesst es sich bei der Entkopplung auch wieder automatisch.

In die Position gemäss Figur 3 gelangt der Extraktionsbecher 5 durch eine horizontale Bewegung des Halters 4 entlang dem horizontalen Teil 2′ der Steuerbahn 2. Bei dieser horizontalen Bewegung gleitet der Stössel 7 auf dem ausfahrbaren Anschlag 15. Der ausfahrbare Anschlag entspricht in der Breite etwa dem Aussendurchmesser des Extraktionsbechers 5. Während der Honrizontalbewegung gleitet der Extraktionsbecher 5 haarscharf unter einem fix an der Montageplatte 1 angeordneten Abstreifer durch. Dabei stösst der Abstreifer 16 den Filterkuchen 17 vom beweglichen Filter 6 und fällt in ein entsprechend vorgesehenes Auffangbehältnis. Der Abstreifer 16 kann zusätzlich noch mit einem Gummischaber 18 versehen sein, der den beweglichen Filter 6 gleichzeitig von Restpartikeln des extrahierten Kaffeepulvers reinigt. Beim weiteren Verlauf des Extraktionsbechers in der Steuerbahn nach rechts zur Ausgangsposition hin gleitet nun der Stössel 7 vom Anschlag 15 hinunter und Filter 6 und Stössel 7 gelangen selbsttäig unter Einwirkung der Schwerkraft in die Ausgangsstellung zurück. Sollte die Schwerkraft wegen der erhöhten Reibung des Stössels 7 in der nicht dargestellten Dichtung nicht ausreichen, so kann selbstverständlich eine entsprechende Feder nachhelfen. Auch andere passive mechanische Lösungen sind denkbar, bei der die Aktive Bewegung des Halters des Extraktionsbechers ausgenutzt werden kann. Auch hier kann der bewegliche Halter bei seiner Verschiebung zur Endposition hin wiederum den ausfahrbaren Anschlag in seiner eingezogenen, ursprünglichen Lage zurückbefördern.
Nun ist die Vorrichtung für einen nächsten Zyklus bereit.

Wie aus der obigen Beschreibung hervorgeht, reduziert sich der gesamte mechanische Bewegungsablauf, der zur Durchführung der Extraktion erforderlich ist, auf die L-förmige Bewegung des Halters 4, auf dem der Extraktionsbecher 5 aufgesetzt ist. Hierdurch wird der gesamte Aufbau der erfindungsgemässen Vorrichtung erheblich vereinfacht und die potentielle Gefahr von Defekten verringert. Hinzu kommt jedoch die ausserordentliche Unterhaltsfreundlichkeit. Mit einem einzigen Griff lässt sich der Extraktionsbecher 5 vom Halter 4 entfernen. Der Extraktionsbecher, sowie der bewegliche Filter, mit dem daran befestigten Stössel lassen sich problemlos ausspülen und wiederum in die Vorrichtung einsetzen. Auch der am lösbaren Extraktionskolben 11 befestigte Filter 12 ist leicht zugänglich und kann ebenfalls ohne Schwierigkeiten gereinigt werden. Schliesslich ist aber auch der Abstreifer 16 mit dem Gummischaber 18 genauso leicht zugänglich und lässt sich ohne Schwierigkeiten mit einem feuchten Lappen reinigen. Teile des Filterkuchens 17, die beim Abstreifen eventuell auch auf den Anschlag 15 fallen, werden automatisch von diesem abgestreift, wenn der Anschlag 15 in die Montageplatte 1 zurückgezogen wird. Aber auch die Dichtungen, die gelegentlich ausgewechselt werden müssen, sind leicht zugänglich.
Der Extraktionsbecher 5 kann auch elektrisch beheizt sein. Interessant ist dabei, dass sich beispielsweise die Heizung des Extraktionsbechers nur in der Ausgangslage einschalten lässt, wodurch eine erhöhte Sicherheit erreicht wird. Die elektrische Verbindung kann derart gestaltet werden, dass durch die Horizontalbewegung ein einfacher elektrischer Stecker ein- und ausgesteckt werden kann. Die Heizung des Extraktionskolbens kann nach bekanntem Muster gleichzeitig durch die Heisswasseraufbereitung 10 erfolgen. Auf diese Weise ist eine optimale Temperaturführung gewährleistet.

Aus Sicherheitsgründen muss ein Endschalter vorgesehen sein, der feststellt, ob er Extraktionsbecher 5 in der Endposition beziehungsweise Ausgangsposition vorhanden ist, damit ein Zyklus nicht ablaufen kann, wenn der Becher zur Reinigung entnommen ist. Ein solcher Schalter muss ebenfalls das Vorhandensein des oberen Extraktionskolbens 11 überwachen. Nur wenn beide in Serie geschalteten Schalter geschlossen sind, soll ein Zyklus ausgelöst werden können.
Wie bereits erwähnt, braucht die Steuerbahn nicht in zwei Abschnitte gegliedert sein, wie die im dargestellten Beispiels geschehen ist. Lediglich im Bereich in dem Extraktionsbecher und Extraktionskolben miteinander im Eingriff stehen, sollte die Steuerbahn 2 entsprechend gradlinig verlaufen. Ansonsten kann die Steuerbahn selbstverständlich auch bogenförmig verlaufen.

## Patentansprüche

1. Vorrichtung zur Zubereitung von heissen Getränken durch Extraktion, insbesondere zur Zubereitung von Kaffee, mit einer Getränkepulveraufbereitungs- und Dosiereinheit (3), einer Heisswasseraufbereitung (10) mit einer Dosierpumpe und Ausstossmittel zur Entfernung des gebrauchten Getränkepulvers, aus einem beweglichen Extraktionsbecher (5), dadurch gekennzeichnet, dass der Extraktionsbecher (5) lösbar auf einem beweglichen Halter (4) befestigbar ist, und dass der Halter (4) in einer Steuerbahn (2) so geführt ist, dass der Extraktionsbecher (5) eine horizontale (2') und eine vertikale (2'') Bewegung ausübt, wobei ferner im Extraktionsbecher (5) ein Filter (6) verschiebbar gelagert ist, und dass zwischen den Endpositionen der Steuerbahn (2) und ausserhalb derselben ein festmontierter Abstreifer (16) angeordnet ist.

2. Vorrichtung nach Anspruch 1 , dadurch gekennzeichnet, dass der Filter (6) im Extraktionsbecher (5) mit einem Stössel (7) verbunden ist, der bei der Bewegung des Extraktionsbechers auf seiner Steuerbahn (2) mittels einem ausfahrbaren Anschlag den Filter oben hält, wenn der Extraktionsbecher bei der Rückbewegung sich absenkt.

3. Vorrichtung nach Anspruch 1, dadurch gekennzeichnet, dass am Extraktionsbecher (5) ein Heisswassereinlaufstutzen (8) fest angeordnet ist.

4. Vorrichtung nach Anspruch 3, dadurch gekennzeichnet, dass der Heisswassereinlaufstutzen (8) mit einer Dichtung (9) versehen ist, die den Stutzen mit einer Auslassöffnung an der Heisswasseraufbereitung (10) abdichtet, wenn der Extraktionsbecher (5) in der Extraktionsposition (Figur 2) ist.

5. Vorrichtung nach Anspruch 1, dadurch gekennzeichnet, dass ein mit dem Extraktionsbecher (5) zusammenwirkender Extraktionskolben (11) derart fest montiert ist, dass der Extraktionskolben (11) in der Extraktionsposition in den Extraktionsbecher (5) dichtend hineinragt und das darin befindliche Getränkepulver komprimiert.

6. Vorrichtung nach Anspruch 1, dadurch gekennzeichnet, dass die Steuerbahn (2) L-förmig verläuft.

7. Vorrichtung nach Anspruch 1, dadurch gekennzeichnet, dass die Steuerbahn im wesentlichen bogenförmig verläuft.

8. Vorrichtung nach Anspruch 1, dadurch gekennzeichnet, dass in der Ausgangslage der Extraktionsbecher (5) unter der Getränkepulveraufbereitung- und Dosiereinheit (3) steht.

9. Vorrichtung nach Anspruch 1, dadurch gekennzeichnet, dass der Extraktionsbecher (5) mit einer Heizung versehen ist.

10. Vorrichtung nach Anspruch 9, dadurch gekennzeichnet, dass die Heizung elektrisch ist und nur in mindestens einer Endlage einschaltbar ist.

11. Vorrichtung nach Anspruch 1, dadurch gekennzeichnet, dass der Abstreifer (16) mit einem auswechselbaren Gummischaber versehen ist.

## Claims

1. Device for preparing hot drinks by extraction, especially for preparing coffee, with a drink powder preparing and metering unit (3), a hot-water preparing means (10) with a metering pump and discharge means for removing the used drink powder from a movable extraction bowl (5), characterised in that the extraction bowl (5) is fixable detachably to a movable holder (4) and in that the holder (4) is so guided in a guide track (2) that the extraction bowl (5) describes a horizontal (2') and a vertical (2'') movement, a filter (6) being additionally located displaceably in the extraction bowl (5), and in that a rigidly mounted stripper (16) is arranged between the end positions of the guide track (2) and outside the track.

2. Device according to Claim 1, characterised in that the filter (6) in the extraction bowl (5) is connected to a plunger (7) which, when the extraction bowl is moved on its guide track (2), holds the filter in the upper position by means of an extensible stop, when the extraction bowl is lowered on its return movement.

3. Device according to Claim 1, characterised in that a hot water inlet pipe (8) is attached rigidly to the extraction bowl (5).

4. Device according to Claim 3, characterised in that the hot water inlet pipe (8) is provided with a seal (9) which seals the pipe (8) to an outlet of the hot water preparation means (10) when the extraction bowl (5) is in the extraction position (Fig. 2).

5. Device according to Claim 1, characterised in that an extraction piston (11) working in conjunction with the extraction bowl (5) is rigidly mounted in such a way that the extraction piston (11) projects sealingly into the extraction bowl (5) in the extraction position and compresses the drink powder contained in it.

6. Device according to Claim 1, characterised in that the guide track (2) has an L-shaped configuration.

7. Device according to Claim 1, characterised in that the guide track has an essentially curved configuration.

8. Device according to Claim 1, characterised in that in the starting position the extraction bowl (5) is located below the drink powder preparing and metering unit (3).

9. Device according to Claim 1, characterised in that the extraction bowl (5) is provided with a heater.

10. Device according to Claim 9, characterised in that the heater is electric and can be switched on only in at least one end position.

11. Device according to Claim 1, characterised in that the stripper (16) has a replaceable rubber scraper.

## Revendications

1. Appareil pour préparer des boissons chaudes par extraction, en particulier pour préparer du café, avec une unité de préparation et de dosage de poudre de boisson (3), une préparation d'eau chaude (10), avec une pompe de dosage et un moyen d'éjection pour éliminer la poudre de boisson consommée hors d'un godet d'extraction (5) mobile, caractérisé en ce que le godet d'extraction (5) est susceptible d'être fixé amovible sur un support mobile (4), et en ce que le support (4) est guidé, dans une piste de commande (2), de manière que le godet d'extraction (5) effectue un déplacement horizontal (2') et un déplacement vertical (2''), un filtre (6) étant en outre monté déplaçable dans le godet d'extraction (5), et en ce qu'entre les positions finales de la piste de commande (2) et hors celle-ci est disposé un racleur (16) monté à demeure.

2. Appareil selon la revendication 1, caractérisé en ce que le filtre (6) monté dans le godet d'extraction (5) est relié à un poussoir (7) qui maintient en position haute le filtre lors du déplacement du godet d'extraction sur sa piste de commande (2), au moyen d'une butée déployable, lorsque le godet d'extraction descend lors du déplacement de rappel.

3. Appareil selon la revendication 1, caractérisé en ce qu'une tubulure d'introduction d'eau chaude (8) est montée à demeure sur le godet d'extraction (5).

4. Appareil selon la revendication 3, caractérisé en ce que la tubulure d'introduction d'eau chaude (8) est pourvue d'un joint d'étanchéité (9) assurant une étanchéité entre la tubulure et une ouverture d'évacuation sur la préparation d'eau chaude (10), lorsque le godet d'extraction (5) se trouve dans la position d'extraction (figure 2).

5. Appareil selon la revendication 1, caractérisé en ce qu'un piston d'extraction (11), coopérant avec le godet d'extraction (5), est monté à demeure, de façon que le piston d'extraction (11) pénètre dans le godet d'extraction (5) avec effet d'étanchéité lorsqu'on se trouve dans la position d'extraction et comprime la poudre de boissons se trouvant à l'intérieur.

6. Appareil selon la revendication 1, caractérisé en ce que la piste de commande (2) a une allure en L.

7. Appareil selon la revendication 1, caractérisé en ce que la piste de commande a une allure sensiblement arquée.

8. Appareil selon la revendication 1, caractérisé en ce que la position initiale du godet d'extraction (5) et située sous l'unité de préparation et de dosage de poudre de boisson (3).

9. Appareil selon la revendication 1, caractérisé en ce que le godet d'extraction (5) est pourvu d'un chauffage.

10. Appareil selon la revendication 1, caractérisé en ce que le chauffage est électrique et ne peut être mis en service que lorsqu'on se trouve au moins en position finale.

11. Appareil selon la revendication 1, caractérisé en ce que le racleur (16) est pourvu d'un balai en caoutchouc remplaçable.
